# EUROPEAN PATENT APPLICATION

(11) **EP 3 508 521 A1**
(43) Date of publication of application: **10.07.2019**
(21) Application number: 17844931.0
(22) Date of filing: 23.05.2017
(51) Int. Cl.: C08J 9/228, C08J 9/16, B29C 44/42

(54) **METHOD FOR PREPARING THERMOPLASTIC POLYMER FOAMED BEADS**

(30) Priority: 31.08.2016 CN 201610796178
(71) Applicant: Hangzhou Boste New Materials Technology Co., Ltd, Zhejiang 311106 (CN)
(72) Inventor: YU, Jiabao, Zhejiang 311106 (CN); TANG, Yun, Zhejiang 311106 (CN)
(74) Representative: Cabinet Chaillot
(86) International application number: PCT/CN2017/085479
(87) International publication number: WO 2018/040624

(57) **Abstract**

Disclosed is a method for preparing thermoplastic polymer foamed beads, comprising the following steps: 1) putting polymer particles into a sealed container heated to a foaming temperature, and putting the sealed container in a vacuum environment; 2) introducing a supercritical fluid into the sealed container, and performing swelling diffusion; 3) after 5-60 minutes of swelling diffusion of the supercritical fluid, releasing the pressure of the sealed container to discharge the supercritical fluid, and inducing nucleation and growth of foam pores by controlling the pressure release velocity so as to enable the polymer beads to swell and grow; 4) leading the polymer beads inside the sealed container into a vacuum environment to further swell and grow, finally obtaining the polymer foamed beads with a high foaming ratio. The foaming temperature in step 1) is a temperature where the polymer particles can undergo plastic deformation but cannot flow yet; the foaming temperature is within Tg to Tg+40°C for an amorphous polymer, and Tg is a glass transition temperature of the amorphous polymer; for a crystalline polymer, the foaming temperature is within Tm-20°C to Tm, and Tm is the melting point of the crystalline polymer.

## Description

### Technical Field

The present invention relates to a method for preparing thermoplastic polymer foamed material, and more specifically, relates to a method for preparing high-rate thermoplastic polymer foamed beads by using the technique pertaining to supercritical fluid.

### Background Art

The use of foaming technology to create a large number of bubbles inside a high molecular material to form a porous high molecular foam material is an effective means for reducing product weight and saving material. The material is also characterized by its excellent thermal insulation, its damping and cushioning nature, and the beneficial effects of noise reduction and sound absorption. In general, the higher the foaming ratio of the high molecular foam material, the lighter the weight of the product, and the more the material that is saved, and also the better the properties such as thermal insulation and cushioning. Compared with thermosetting foam material which is non-recyclable and susceptible to environmental pollution, thermoplastic foam plastic material that can be recycled has a better prospect of wide range application.

In most applications, high-rate foamed products have irregular shapes or even extremely complex geometries, such as in the cases of automotive parts, packaging protective products, children's toys, sports equipment and water buoys etc. Currently, a reliable one-time foam molding technology for high-rate thermoplastic polymer foamed products with relatively large size and complicated irregular structure does not exist. Processing of high-rate extruded foamed sheets via turning to manufacture irregular foamed parts is inefficient, costly, and produces a large amount of wasted corner scraps. A two-step molding method of first preparing high-rate thermoplastic polymer foamed beads and then fusing the surfaces of the foamed beads through steam in a mold is an effective way to prepare a high-rate irregular foamed product, thereby achieving highly efficient production of high-rate irregular foamed products without creating corner scraps during production, and hence achieving high material utilization rate.

The non-patent literature Past and present developments in polymer bead foams and bead foaming technology, polymer, 56, (2015) 5-19, summarizes several existing methods of bead forming. A method of adding a foaming agent during suspension polymerization to form foamable polymer particles containing the foaming agent, and then increasing a temperature subsequently to form polymer foamed beads by foaming, is only suitable for amorphous polymer having a higher glass transition temperature (Tg), such as polystyrene (PS) foamed beads; such method is not suitable for crystalline polymer; the alkane foaming agent used, such as commonly used butane or pentane, is flammable. In autoclave foaming, polymer particles are dispersed in water, and the gaseous foaming agent dissolves and diffuses into the polymer particles under high temperature and high pressure, and then rapid pressure release of the autoclave is caused to initiate nucleation and growth of bubbles to form foamed beads. In this method, the aqueous suspension used consumes a large amount of heat, and the heating process also results in a longer production cycle. Furthermore, the foamed beads obtained by this method are required to be washed with water to remove from their surfaces various additives from the aqueous suspension so to not to affect subsequent fusion and forming; as such, there is again a waste of water resources and an increase in cost. In addition, a variety of easily degradable high polymers, such as thermoplastic polyurethane (TPU), polylactic acid (PLA), are also not suitable for steaming and boiling under high temperature for a long period of time. Another foaming method by means of continuous extrusion is also used to produce polymer foamed beads. In such a method, extrusion foaming process may easily result in higher hole ratio among the bubbles because the polymer is in a molten state, and this problem causes the foamed beads to shrink and deform easily, thus affecting subsequent fusion.

Gaseous foaming agent is not safe and not environmentally friendly; much energy is consumed during the process and the resulting product will have a higher cost. Complicated production process and low production efficiency are problems that urgently require a solution in the industry of polymer foamed beads.

### Disclosure of the Invention

In view of the disadvantages in the prior art, the present invention provides a method for preparing high-rate thermoplastic polymer foamed beads by using the technique pertaining to supercritical fluid.

To fulfil the above objects, the present invention provides a method for preparing thermoplastic polymer foamed beads, comprising the following steps:
1) disposing polymer particles into a sealed container pre-heated to a foaming temperature, and placing the sealed container in a vacuum environment;
2) introducing a supercritical fluid into the sealed container to perform swelling and diffusion;
3) after the supercritical fluid swells and diffuses for 5 to 60 minutes, depressurizing the sealed container, drain the supercritical fluid, and initiating nucleation and growth of holes and bubbles by controlling a speed of depressurization, so that polymer particles expand and grow;
4) transferring the polymer particles in the sealed container to the vacuum environment for further expansion and growth, and finally obtaining polymer foamed beads having high foaming ratio; wherein
the foaming temperature in step 1) is a temperature at which the polymer particles can be plastically deformed but still cannot flow. For amorphous polymer, the foaming temperature is within a range of Tg to Tg+40°C, wherein Tg refers to glass transition temperature of the amorphous polymer. For crystalline polymer, the foaming temperature is within a range of Tm-20°C ∼ Tm, wherein Tm is a melting point temperature of the crystalline polymer.

The accumulated volume of the polymer particles in the sealed container is equal to or less than 90% of a volume of the sealed container.

The supercritical fluid has a pressure of 5-30 MPa.

In order to reduce heat loss, reduce energy consumption of the entire process, and to improve foaming efficiency and foaming effect, the sealed container is an autoclave and is installed inside a heat and pressure device; the autoclave comprises a body and a lid; the lid is installed on an upper beam of the heat and pressure device; an air inlet valve and an air exhaust valve are installed on the lid; the body is mounted on a lower beam of the heat and pressure device to move along with a hydraulic cylinder; the lid and the body are both mounted with heating temperature control elements; a sealed space is formed by panels enclosing the heat and pressure device; a vacuum pump is connected to the heat and pressure device, and the sealed space is vacuumed by the vacuum pump.

Preferably, the foaming temperature of the amorphous polymer is within a range of Tg to Tg+20°C.

Preferably, the foaming temperature of the crystalline polymer is within a range of Tm-10°C to Tm.

Preferably, the polymer particles are one kind of or combinations of the following: polyethylene (PE), polypropylene (PP), polylactic acid (PLA), thermoplastic polyurethane (TPU), polyether block amide (Pebax®) elastomer, ethylene vinyl acetate (EVA) copolymer, polyolefin (POE) elastomer, and thermoplastic polyester elastomer (TPEE) having a number average molecular weight of 1 to 5,000,000.

Preferably, each of the polymer particles has a diameter of 0.2 to 5 mm.

Preferably, the supercritical fluid is supercritical carbon dioxide or supercritical nitrogen or a mixed fluid of the supercritical carbon dioxide and the supercritical nitrogen in any ratio.

The technical principle of the invention: the present invention creates a high temperature and high pressure atmosphere in the autoclave, and achieves a balance of heat transfer and mass transfer inside the polymer particles, and by rapid depressurization, gas dissolved in the polymer particles is supersaturated, thereby initiating nucleation and growth of holes and bubbles. After the autoclave is opened, as the polymer particles enter a vacuum environment, resistance encountered by the growth of holes and bubbles is reduced, and the holes and bubbles may grow further, thereby forming high-rate polymer foamed beads.

The invention has the following beneficial effects: By using clean supercritical carbon dioxide or supercritical nitrogen instead of other various unsafe and environmentally unfriendly foaming agents, the process is clean and environmentally friendly, the product is clean and unpolluted, the beads do not need to be cleaned after foaming, and the process flow is shortened. By means of the vacuum outside the autoclave, the resistance encountered by the bubbles growth is reduced, and the bubbles have the opportunity to further grow; the foamed beads which grow and expand twice can easily achieve higher foaming rate, thereby further reducing the weight of the product and saving materials, while facilitating reduction in energy consumption and improve foaming efficiency. Since high-pressure gas has a large diffusion area inside the particles and the diffusion paths are short, diffusion balance can be achieved relatively quickly, as such, foaming time is extremely shortened compared to one-time foam molding of a large-sized product. Therefore, for high-rate foamed products, especially large-sized high-rate foamed products, the use of supercritical fluid in the foaming of particles to efficiently obtain high-rate foamed beads and then using the steam inside a mold for fusion and shaping of surfaces, can greatly improve the production efficiency of high-rate foamed products and significantly reduce costs.

### Brief Description of Drawings

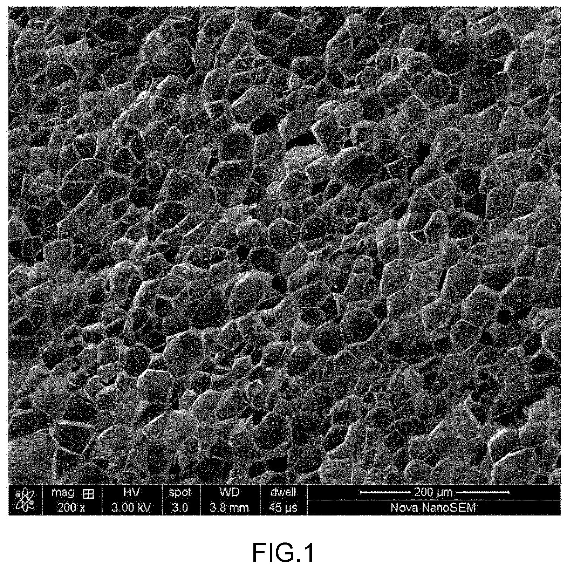

FIG. 1 is a photo illustrating the foamed beads obtained according to embodiment 1.

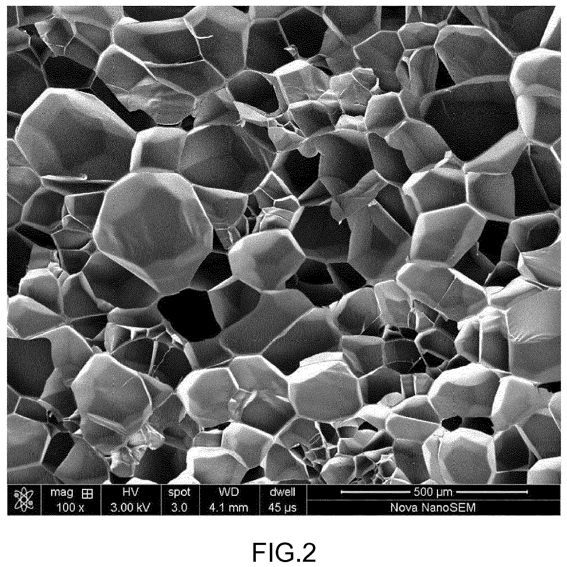

FIG. 2 is a scan photo illustrating bubbles and holes inside the foamed beads obtained according to embodiment 1.

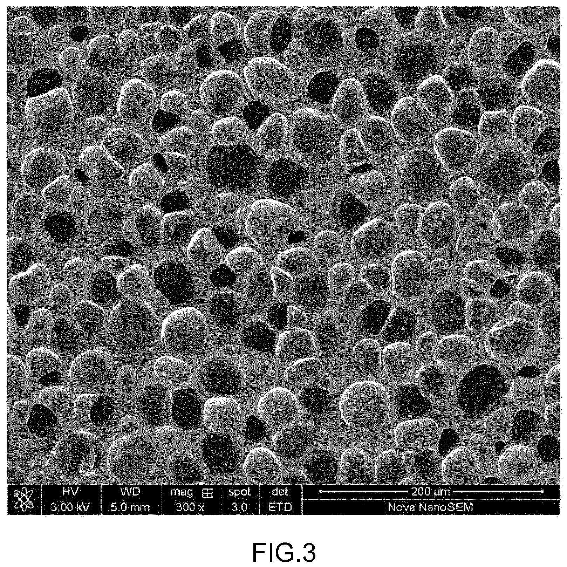

FIG. 3 is a photo illustrating the foamed beads obtained according to embodiment 2.

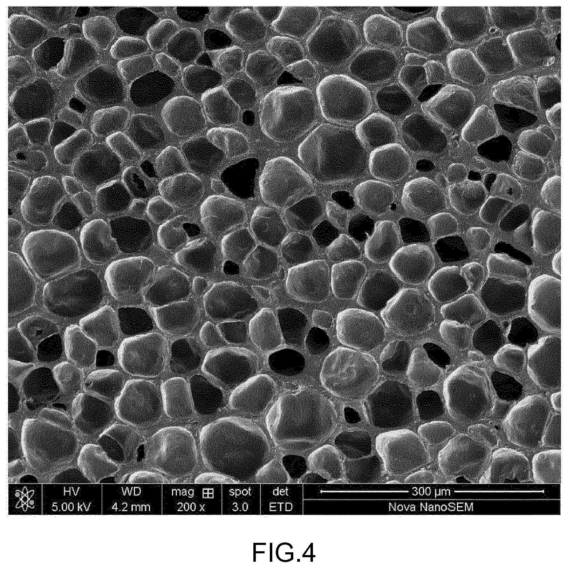

FIG. 4 is a scan photo illustrating bubbles and holes inside the foamed beads obtained according to embodiment 2.
FIG. 5 is a photo a finished product obtained by surface fusion of the products obtained according to embodiment 2.
FIG. 6 is a schematic structural view of a device used by the present invention.

### Best Mode for Carrying out the Invention

Analytical test is performed as follows:
Using an XSE analytical balance provided by the density kit of METTLER TOLEDO to measure a density of the foamed beads, and then a volume expansion ratio of the foamed beads will be calculated, wherein the **volume expansion ratio (Rex) = ρ polymer / ρ foam, wherein ρ** polymer is a density of the original particles, and ρ foam is a density of the foamed beads. The foamed beads are frozen by liquid nitrogen and then cracked, and the cracked sectional surface is sprayed with gold, and then the structures of the holes and bubbles inside the foamed beads are observed using a scanning electron microscope.

### Embodiment 1

Heating the autoclave mounted on the heat and pressure device 1 to 105°C; disposing PE particles having an average diameter of 2.3 mm, a number average molecular weight of 150,000 and a melting point of 110°C into the autoclave; leveling up a hydraulic cylinder 4 to enclose a body 2 of the autoclave and to pressurize and seal the body 2; introducing supercritical CO₂ of 20 MPa into the autoclave through an air inlet valve 5; starting a vacuum pump 7 to create a vacuum environment in the heat and pressure device 1 outside the autoclave; after the CO₂ is diffused into the PE particles for 20 minutes, opening an air exhaust valve 6 quickly to release CO₂ pressure inside the autoclave, and thus initiating nucleation and growth of holes and bubbles inside the PE particles, thereby causing expansion of the PE particles; and then rapidly lowering the hydraulic cylinder 4 to open the autoclave, so as to eject the PE particles from the autoclave into the vacuum environment where the holes and bubbles inside the PE particles grow further such that the PE particles are further expanded. Measurements of the obtained foamed material are shown in Table 1 below.

### Embodiment 2

Heating the autoclave mounted on the heat and pressure device 1 to 124°C; disposing PP particles having an average diameter of 3.4 mm, a number average molecular weight of 210,000 and a melting point of 132°C into the autoclave; leveling up a hydraulic cylinder 4 to enclose a body 2 of the autoclave and to pressurize and seal the body 2; introducing supercritical CO₂ of 15MPa into the autoclave through an air inlet valve 5; starting a vacuum pump 7 to create a vacuum environment in the heat and pressure device 1 outside the autoclave; after the CO₂ is diffused into the PP particles for 30 minutes, opening an air exhaust valve 6 quickly to release CO₂ pressure inside the autoclave, and thus initiating nucleation and growth of holes and bubbles inside the PP particles, thereby causing expansion of the PP particles; and then rapidly lowering the hydraulic cylinder 4 to open the autoclave, so as to eject the PP particles from the autoclave into the vacuum environment where the holes and bubbles inside the PP particles grow further such that the PP particles are further expanded. Measurements of the obtained foamed material are shown in Table 1 below.

### Embodiment 3

Heating the autoclave mounted on the heat and pressure device 1 to 132°C; disposing TPU particles having an average diameter of 4.1 mm, a number average molecular weight of 80,000 and a melting point of 142°C into the autoclave; leveling up a hydraulic cylinder 4 to enclose a body 2 of the autoclave and to pressurize and seal the body 2; introducing supercritical CO₂ of 25 MPa into the autoclave through an air inlet valve 5; starting a vacuum pump 7 to create a vacuum environment in the heat and pressure device 1 outside the autoclave; after the CO₂ is diffused into the TPU particles for 10 minutes, opening an air exhaust valve 6 quickly to release CO₂ pressure inside the autoclave, and thus initiating nucleation and growth of holes and bubbles inside the TPU particles, thereby causing expansion of the TPU particles; and then rapidly lowering the hydraulic cylinder 4 to open the autoclave, so as to eject the TPU particles from the autoclave into the vacuum environment where the holes and bubbles inside the TPU particles grow further such that the TPU particles are further expanded. Measurements of the obtained foamed material are shown in Table 1 below.

### Embodiment 4

Heating the autoclave mounted on the heat and pressure device 1 to 108°C; disposing PLA particles having an average diameter of 3.5 mm, a number average molecular weight of 150,000 and a melting point of 115°C into the autoclave; leveling up a hydraulic cylinder 4 to enclose a body 2 of the autoclave and to pressurize and seal the body 2; introducing supercritical CO₂ of 20 MPa into the autoclave through an air inlet valve 5; starting a vacuum pump 7 to create a vacuum environment in the heat and pressure device 1 outside the autoclave; after the CO₂ is diffused into the PLA particles for 20 minutes, opening an air exhaust valve 6 quickly to release CO₂ pressure inside the autoclave, and thus initiating nucleation and growth of holes and bubbles inside the PLA particles, thereby causing expansion of the PLA particles; and then rapidly lowering the hydraulic cylinder 4 to open the autoclave, so as to eject the PLA particles from the autoclave into the vacuum environment where the holes and bubbles inside the PLA particles grow further such that the PLA particles are further expanded. Measurements of the obtained foamed material are shown in Table 1 below.

**Table 1: Measurements of average diameter, particle density and foaming ratio of the four embodiments described above.**

| Embodiment | Average diameter of particles | Particle density g/cm³ | Foaming ratio |
|---|---|---|---|
| Embodiment 1 | 6.4 | 0.042 | 22 |
| Embodiment 2 | 11.1 | 0.026 | 35 |
| Embodiment 3 | 9.8 | 0.086 | 14 |
| Embodiment 4 | 7.2 | 0.138 | 9 |

### Embodiment 5

### Formation by molding

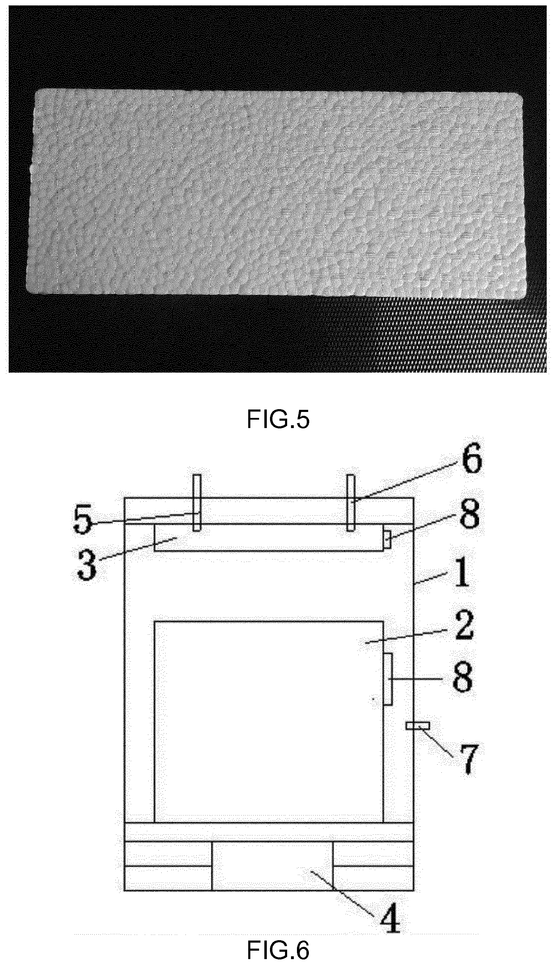

Adding the TPU foamed beads obtained in embodiment 3 to a mold of a desired shape, locking the mold, introducing steam into the mold wherein the steam reaches the TPU foamed beads through a steam valve on a surface of the mold; under a steam pressure of 0.18-0.35 bar, surfaces of the TPU foam beads are softened and fused; after the desired shape is formed, cooling water is introduced to cool the mold. After the mold is cooled, open the mold and disengage the product from the mold to obtain a TPU molded product. Fig. 5 shows a TPU molded product obtained in according to embodiment 5.

Besides the preferred embodiments described above, the present invention may still have other embodiments. Various changes or modifications made by a person skilled in the art in accordance with the teachings of the present invention without deviating from the spirit of the present invention should also fall within the scope defined by the claims of the present invention.

## Claims

1. A method for preparing thermoplastic polymer foamed beads, comprising the following steps:
1) disposing polymer particles into a sealed container pre-heated to a foaming temperature, and placing the sealed container in a vacuum environment;
2) introducing a supercritical fluid into the sealed container to perform swelling and diffusion;
3) after the supercritical fluid swells and diffuses for 5 to 60 minutes, depressurizing the sealed container, drain the supercritical fluid, and initiating nucleation and growth of holes and bubbles by controlling a speed of depressurization, so that polymer particles expand and grow;
4) transferring the polymer particles in the sealed container to the vacuum environment for further expansion and growth, and finally obtaining polymer foamed beads having high foaming ratio; wherein
the foaming temperature in step 1) is a temperature at which the polymer particles are capable to be plastically deformed but still unable to flow; for amorphous polymer, the foaming temperature is within a range of Tg to Tg+40°C, wherein Tg refers to glass transition temperature of the amorphous polymer; for crystalline polymer, the foaming temperature is within a range of Tm-20°C to Tm, wherein Tm is a melting point temperature of the crystalline polymer;
an accumulated volume of the polymer particles in the sealed container is equal to or less than 90% of a volume of the sealed container; t
the supercritical fluid has a pressure of 5-30 MPa;
the polymer foamed beads as finally obtained in step 4) have a volume expansion ratio of 1-80, and a bead diameter of 0.5-22mm, irrespective of whether the polymer is the amorphous polymer or the crystalline polymer.

2. The method of claim 1, wherein the sealed container is an autoclave and is installed inside a heat and pressure device (1); the autoclave comprises a body (2) and a lid (3); the lid (3) is installed on an upper beam of the heat and pressure device (1); an air inlet valve (5) and an air exhaust valve (6) are installed on the lid (3); the body (2) is mounted on a lower beam of the heat and pressure device (1) to move along with a hydraulic cylinder (4); the lid (3) and the body (2) are both mounted with heating temperature control elements (8); a sealed space is formed by panels enclosing the heat and pressure device (1); a vacuum pump (7) is connected to the heat and pressure device (1), and the sealed space is vacuumed by the vacuum pump (7).

3. The method of claim 1, wherein the foaming temperature of the amorphous polymer is within a range of Tg to Tg+20°C.

4. The method of claim 1, wherein the foaming temperature of the crystalline polymer is within a range of Tm-10°C to Tm.

5. The method of claim 1, wherein the polymer particles are one kind of or combinations of the following: polyethylene (PE), polypropylene (PP), polylactic acid (PLA), thermoplastic polyurethane (TPU), polyether block amide (Pebax®) elastomer, ethylene vinyl acetate (EVA) copolymer, polyolefin (POE) elastomer, and thermoplastic polyester elastomer (TPEE) having a number average molecular weight of 1 to 5,000,000.

6. The method of claim 1 or claim 5, wherein each of the polymer particles has a diameter of 0.2 to 5 mm.

7. The method of claim 1, wherein the supercritical fluid is supercritical carbon dioxide or supercritical nitrogen or a mixed fluid of the supercritical carbon dioxide and the supercritical nitrogen in any ratio.
